Europäisches Patentamt

European Patent Office

Office européen des brevets

(11) Publication number: **0 231 012 B1**

(12) # EUROPEAN PATENT SPECIFICATION

(45) Date of publication of patent specification: **11.12.91**  (51) Int. Cl.5: **H02M 7/757**, H02M 7/162

(21) Application number: **87101074.0**

(22) Date of filing: **27.01.87**

(54) Control apparatus for AC-DC converter.

(30) Priority: **29.01.86 JP 17193/86**

(43) Date of publication of application:
**05.08.87 Bulletin 87/32**

(45) Publication of the grant of the patent:
**11.12.91 Bulletin 91/50**

(84) Designated Contracting States:
**DE SE**

(56) References cited:
**EP-A- 0 075 319**
**EP-A- 0 162 425**
**US-A- 4 330 815**

(73) Proprietor: **KABUSHIKI KAISHA TOSHIBA**
**72, Horikawa-cho Saiwai-ku**
**Kawasaki-shi Kanagawa-ken(JP)**

(72) Inventor: **Sakai, Takami c/o Patent Division**
**KABUSHIKI KAISHA TOSHIBA 1-1 Shibaura**
**1-chome**
**Minato-ku Tokyo 105(JP)**
Inventor: **Hoshi, Kimihiro c/o Patent Division**
**KABUSHIKI KAISHA TOSHIBA 1-1 Shibaura**
**1-chome**
**Minato-ku Tokyo 105(JP)**
Inventor: **Noro, Yasuhiro c/o Patent Division**
**KABUSHIKI KAISHA TOSHIBA 1-1 Shibaura**
**1-chome**
**Minato-ku Tokyo 105(JP)**

(74) Representative: **Blumbach Weser Bergen**
**Kramer Zwirner Hoffmann Patentanwälte**
**Radeckestrasse 43**
**W-8000 München 60(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a control apparatus for an AC-DC converter applied to DC power transmission equipment, a frequency converter or the like.

In a conventional DC power transmission system, the capacity of an AC system, to which an AC-DC converter apparatus is connected, is sufficiently larger than that of the converter apparatus, i.e., this AC system is a strong AC system. In this case, the reactive power consumed by the converter apparatus can be sufficiently compensated for by the large capacity of such a strong AC system.

Meanwhile, in recent years, DC transmission equipment has often been constructed at a location where a large generating plant is not installed. In other words, electric power is supplied, by means of a DC power transmission, to a location having a weak AC system. However, when a weak AC system is used, namely the capacity of the AC system is much less than that of the converter apparatus, voltage instability, mentioned below, will often occur.

Since the AC-DC converter apparatus is normally operated under a constant power control, if the AC voltage decreases for some reason, the DC current will increase in order to compensate for this decrease in the transmission power, to thereby keep the transmission power constant. Then, the operating point of the AC-DC converter apparatus shifts, so that the reactive power to be consumed thereby increases, resulting in a further decrease in the AC voltage. Thus, the DC current again increases by means of the constant power control operation. Such an operation is repeated until and the system is eventually out of the stable state, i.e., it is stepped out.

Various methods for preventing such voltage instability have been proposed. A conventional system provided for this purpose includes a so-called voltage-dependent current limiter (hereinafter referred to as VDCL) in which the current set value of a constant current control system is reduced depending on the decrease in DC voltage. Otherwise, a synchronous compensator or rotary condenser (hereinafter referred to as RC), or a static var compensator (hereinafter referred to as SVC), is specially used.

Now, methods to prevent said voltage instability will be considered briefly.

(I) When the AC system voltage decreases, leading reactive power is supplied, at a high speed to the AC system, or, alternately, lagging reactive power to be consumed by the AC-DC converter apparatus is reduced, so that the AC system voltage is kept stable state.

(2) The voltage swing (fluctuation) is promptly controlled to be removed.

The RC is not suitable because its operating speed is not sufficiently high. On the other hand, both the SVC and VDCL are capable of operating at high speed. However, if an SVC or VDCL with a high operating speed is used, the voltage swing will occur, or, alternately, voltage swing will not be able to be suppressed sufficiently promptly. Meanwhile, an increase in capacity of the RC or SVC generally increases the cost of the device. Of course, a method whereby the advantages of the RC or SVC and of the VDCL are utilized can obviously be considered. However, in this case, the problem of interference between the control system of the RC or SVC and that of the VDCL may occur. In other words, even if any of the foregoing methods (1) and (2) is adapted, practical difficulties cannot be avoided.

A control apparatus according to the first portion of claim 1 is disclosed in EP-A-0 162 425. This prior art provides for the above mentioned voltage dependent current control involving the explained problems.

It is accordingly an object of the present invention to provide a control apparatus for an AC-DC converter, which can operate stably and, at the same time, can maintain an AC system voltage at a prescribed value.

This object is achieved with a control apparatus as claimed in claim 1.

Preferred embodiments of the invention are subject matter of the dependent claims.

A control apparatus of the present invention includes means for detecting that the voltage of an AC system, to which an AC-DC converter apparatus is connected, has dropped below a predetermined value; a first control system for correcting the current set value of a constant current control system, simultaneously with the detection of the AC system voltage reduction; and a second control system for correcting the current set value of the constant current control system when the AC system voltage has not been corrected even after the elapse of a predetermined period of time, despite the current set value being already corrected by the first control system, wherein the second control system has a function to maintain its correction output value for a predetermined period of time.

The control apparatus of the present invention may also have means for disenabling the function of maintaining said correction output value, under a condition wherein the AC system voltage exceeds the predetermined value for a predetermined period of time.

According to the above apparatus, when the AC system voltage falls below the predetermined value due to a malfunction occurring in of the AC system or the like, the current set value of the constant current control system is promptly reduced, by the operation of the first control system. As a result of this operation, the reactive power to be consumed by the AC-DC converter apparatus decreases, so that the AC system voltage is returned to a normal value. However, voltage swing could still occur since the first control system operates at a high speed.

If the malfunction in the AC system is eliminated within a short period of time, and if the AC system then returns to its original operating state, the second control system does not operate. However, if the malfunction in the AC system still remains, so that the condition of the AC system changes, the second control system then operates to reduce the current set value of the constant current control system, and to hold the current set value for a predetermined period of time, to thereby stabilize the condition of the AC system.

This invention can be more fully understood from the following detailed description when taken in conjunction with the accompanying drawings, in which:

Fig. 1 is a block diagram of a conventional control apparatus for DC power transmission equipment;

Fig. 2 shows an example of the operation characteristic of an AC-DC converter apparatus;

Fig. 3 is a block diagram of an embodiment of the present invention;

Figs. 4A-4F are timing charts explaining the operation of the embodiment of this invention;

Fig. 5 is a connection diagram showing part of an AC system, which is applicable to the embodiment of this invention;

Fig. 6 is a block diagram showing a modification of the embodiment of Fig. 3;

Fig. 7 is a block diagram showing another embodiment of the present invention;

Fig. 8 is a block diagram showing still another embodiment of the present invention;

Fig. 9 is a flow chart explaining an operational sequence of the embodiment of Fig. 3, in which circuit elements 23-29 are replaced by a microcomputer (not shown); and

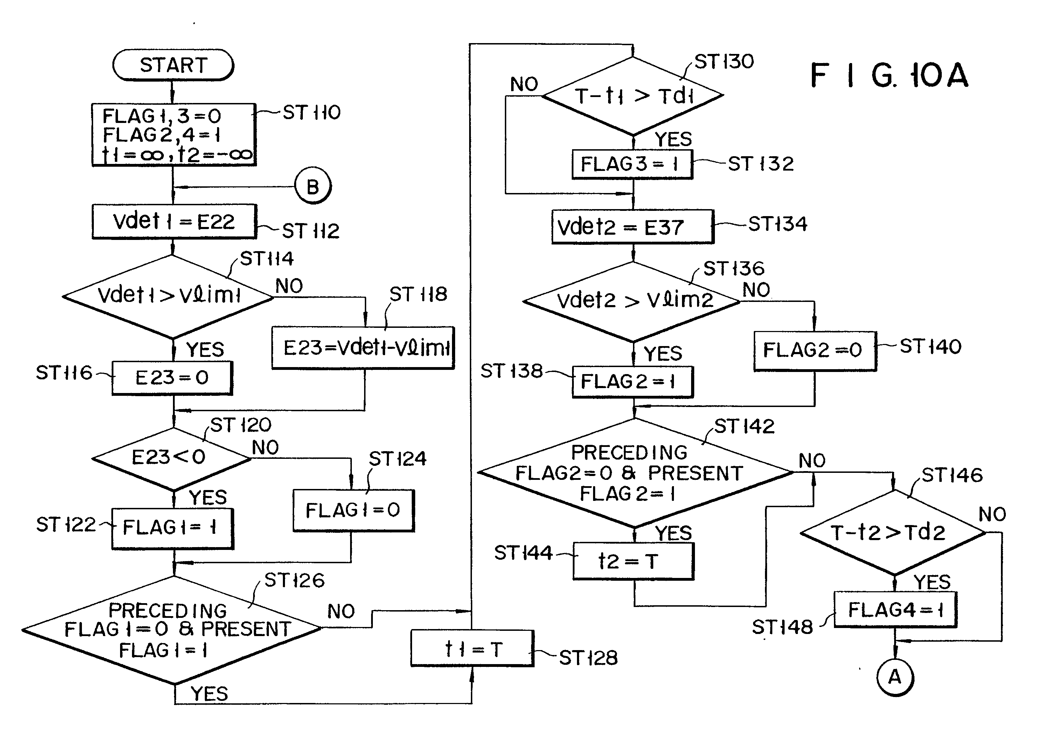

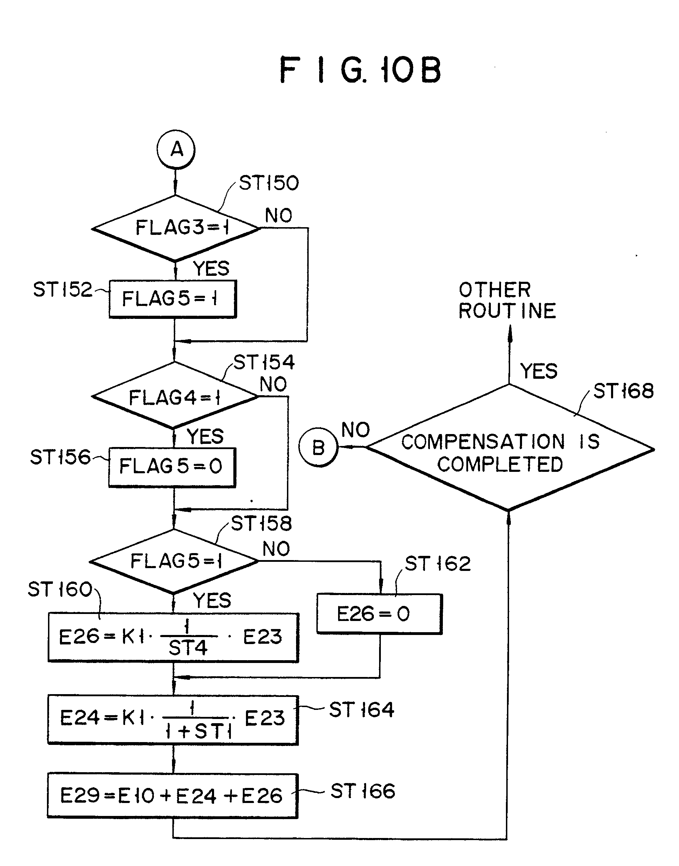

Figs. 10A and 10B are flowcharts jointly explaining an operational sequence of the embodiment of Fig. 7, in which circuit elements 23-29 and 35-39 are replaced by a microcomputer (not shown).

Hereinafter, preferred embodiments of the present invention will be described in detail, with reference to the accompanying drawings. In the following description, the same or similar elements are denoted by the same or similar reference numerals throughout the drawings, to thereby avoid redundant explanations.

Before explaining the embodiment of the present invention in detail, a prior art example will be described briefly for better understanding of this invention.

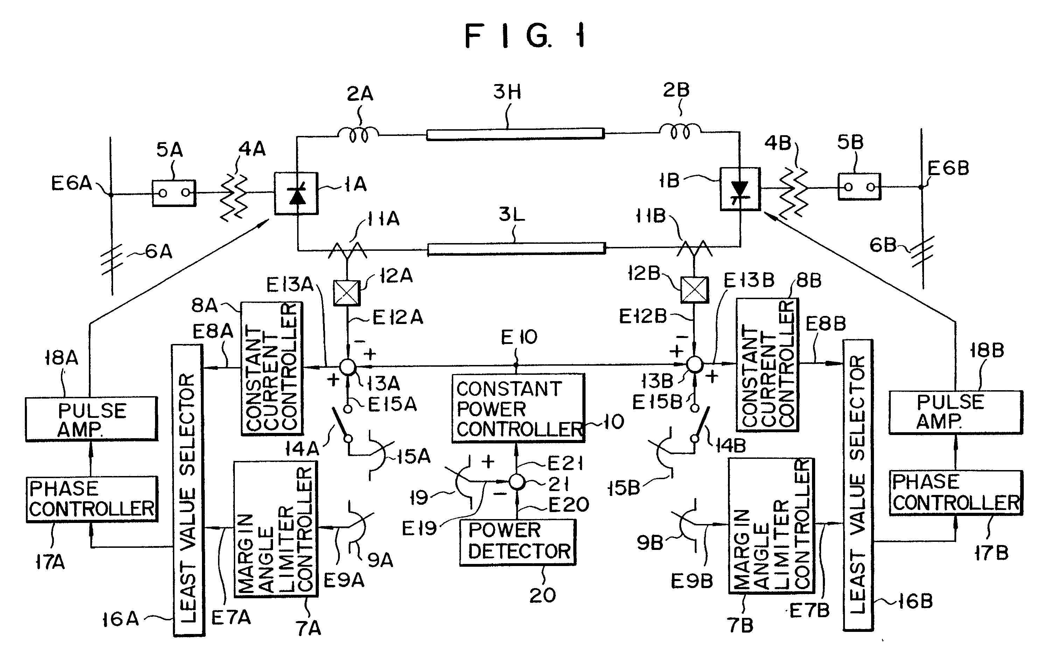

Fig. 1 shows a schematic block diagram of a conventional converter control apparatus of a DC power transmission system, in which the present invention is not applied. In the power converter of this DC power transmission system, the DC sides of converters 1A and 1B are respectively coupled, via DC reactors 2A and 2B, to DC transmission lines 3H and 3L. The AC sides of converters 1A and 1B are respectively coupled, via power transformers 4A and 4B and circuit breakers 5A and 5B, to AC systems 6A and 6B.

Converters 1A and 1B are provided with margin angle limiter controllers 7A and 7B and constant current controllers 8A and 8B. Controllers 7A and 7B serve to limit the margin angles of the converters, so that the values of these margin angles do not fall below prescribed minimum margin angle reference values E9A and E9B obtained from margin angle setting devices 9A and 9B.

On the other hand, current set value E10, delivered from constant power controller 10, is input to each positive input of adders 13A and 13B. Negative inputs of adders 13A and 13B receive DC current detection values E12A and E12B from current/voltage converters 12A and 12B, respectively. Converters 12A and 12B convert the respective values of DC currents, detected by DC current transformers 11A and 11B, into values E12A and E12B, each having a magnitude readily processable by the control circuit of Fig. 1. Difference E13A between values E10 and E12A, and difference E13B between values E10 and E12B, are input to constant current controllers 8A and 8B, respectively. Then, the DC current, flowing through DC transmission lines 3H and 3L, is controlled so as to follow current set value E10.

Current margin setting devices 15A and 15B are coupled, via switches 14A and 14B, to the positive inputs of adders 13A and 13B, respectively. When converter 1A serves as an inverter while converter 1B serves as a rectifier, only switch 14A is closed. When converter 1B serves as an inverter while converter 1A serves as a rectifier, only switch 14B is closed. Thus, either one of current margins E15A and E15B, respectively obtained from devices 15A and 15B, is input to adder 13A or 13B, via closed switch 14A or 14B.

It is now assumed that switch 14B is closed while switch 14A is open. Then, by the action of least value selectors 16A and 16B, smaller output E8A of constant current controller 8A is selected by selector 16A, and smaller output E7B of margin angle limiter controller 7B is selected by selector 16B. The outputs of selectors 16A and 16B are input

to phase controllers I7A and I7B, respectively. By means of the operation of controllers I7A and I7B, the selector outputs are converted into pulse signals which are then supplied, as gate pulses, to converters IA and IB, via pulse amplifiers I8A and I8B. These pulse signals (gate pulses) determine the trigger timings of converters IA and IB.

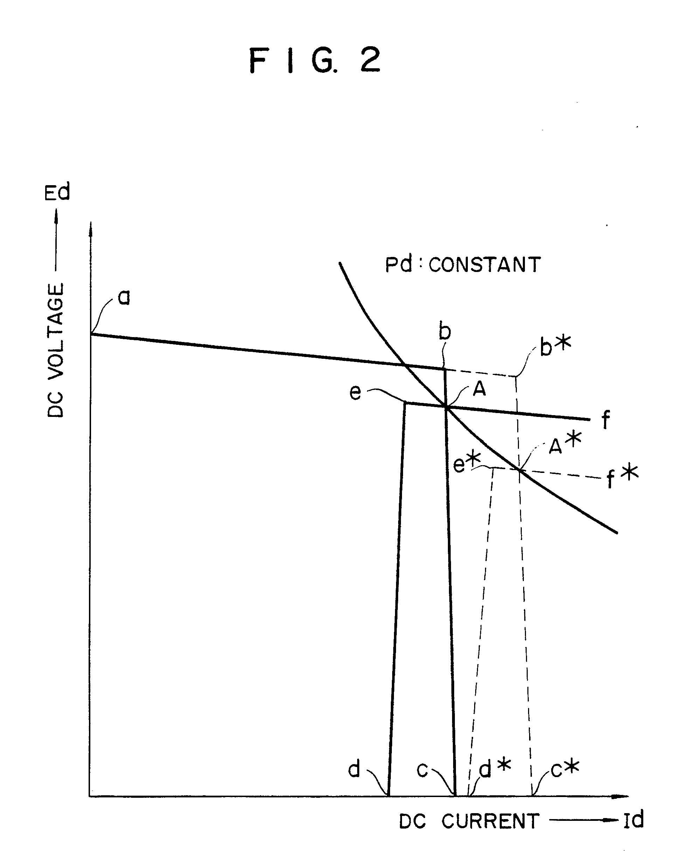

A typical operation curve of the DC power transmission system of Fig. I is shown in Fig. 2. In Fig. 2, the axis of abscissa denotes DC current Id and the axis of ordinate denotes DC voltage Ed. Points a, b, and c define the operation characteristic of converter IA serving as a rectifier. (In this case switch I4A is open.) The line between points a and b represents a regulation portion depending on the commutation impedance, inclusive of the impedance of power transformer 4A, etc. The line between points b and c indicates a constant current characteristic resulting from the operation of constant current controller 8A.

Points d, e, and f in Fig. 2 define the operation characteristic of converter IB serving as an inverter. (In this case, switch I4B is closed.) The line between points d and e indicates a constant current characteristic resulting from the operation of constant current controller 8B. The line between points e and f represents a constant margin angle characteristic of inverter IB, which is obtained by the operation of margin angle limiter controller 7B. The difference between DC currents at points c and d of the operation characteristic curve denotes a current margin in Fig. 2. The converter apparatus of Fig. I is operated at point A defined at the intersection of the operation curves of converters IA and IB. The operation point (A, A*) can shift along power constant curve Pd.

The converter apparatus of a DC power transmission system is generally provided with constant power controller I0, in order that the power transmission system can control the electric power to be transmitted between AC systems 6A and 6B. Power reference value EI9, determined by power setting device I9, is supplied to the positive input of adder 2I, and power detection value E20, indicating the transmission power and obtained from power detector 20, is supplied to the negative input of adder 2I. Difference E2I between values EI9 and E20 is differentially amplified in constant power controller I0, and the amplified signal is used as current set value EI0. In this circuit arrangement, the DC transmission power follows power reference value EI9.

As will be seen from the characteristic curve in Fig. 2, the converter, performing the power inverting operation, determines the DC voltage, and, when performing the power rectifying operation, controls the DC current, to thereby control the DC transmission power.

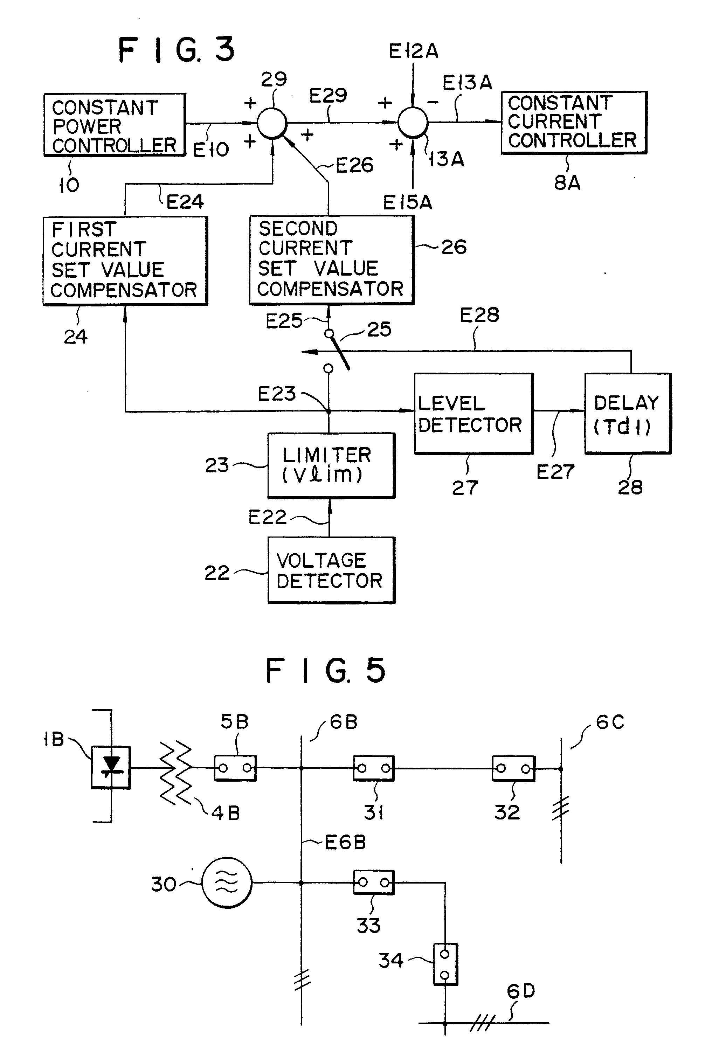

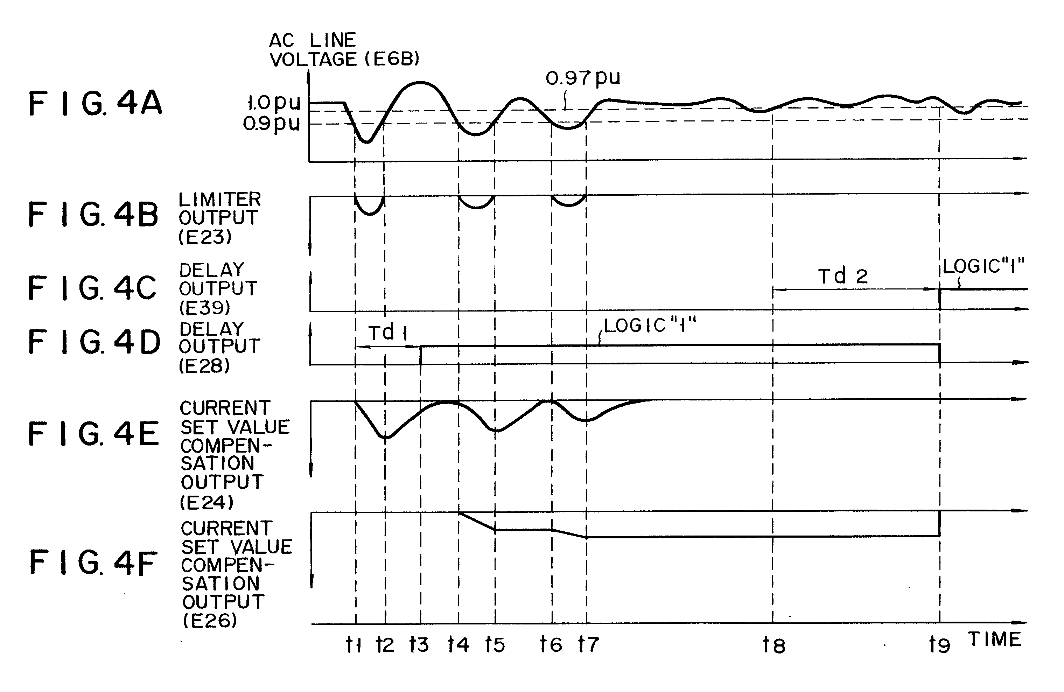

An embodiment of the present invention is shown in Fig. 3. This embodiment is provided between circuit elements I0 and I3A, and/or between circuit elements I0 and I3B of Fig. I. Figs. 4A-4F are timing charts explaining the operation of the embodiment of this invention.

In the embodiment of Fig. 3, the AC voltage (Ed in Fig. 2) of AC system 6B of Fig. I is detected by AC voltage detector 22. Detection value E22 from detector 22 is sent to limiter 23. Limiter 23 has a specific characteristic in that its output E23 is zero when input E22 exceeds predetermined value Vlim and wherein output E23 is generated if input E23 falls below predetermined value Vlim. Output E23 from limiter 23 is supplied to first current set value compensator 24 and to second current set value compensator 26, via switch 25. Output E23 is also supplied to level detector (comparator) 27.

When output E23 from limiter 23 falls below a predetermined value (tl in Fig. 4B), level detector 27 supplies signal E27 with logic level "I" to delay circuit 28 having delay time Tdl. In response to logic level "I" of signal E27, delay circuit 28 generates signal E28 to turn on switch 25 after the elapsed delay time Tdl (t3 in Fig. 4D).

First current set value compensator 24 is formed of a linear delay circuit having a transfer function of $KI \cdot \{(I/(I + sTI)\}$ where KI denotes the gain of compensator 24, and TI denotes the delay time constant. (Another transfer function such as $KI \cdot \{(I + sT2)/(I + sTI)\}$ or $KI \cdot \{(I + sT2)/(I + sTI)(I + sT3)\}$ can be applied to compensator 24, of course.) Compensator 24 supplies compensation value E24 to adder 29, so that output value (current set value) EI0 from constant power controller 10 is reduced by value E24 at adder 29, as AC voltage detected value E22 from detector 22 decreases. Adder 29 supplies adder I3A with compensated current set value E29 representing the sum of EI0, E24, and E26.

On the other hand, second current set value compensator 26 is formed of an integrator having a transfer function of $K2 \cdot (I/ST4)$ or $I/sT5$ where K2 denotes the gain of compensator 26 (K2 may be equal to KI), and T4 or T5 denotes the integration time constant.

When limiter 23 generates output E23, or when AC voltage detected value E22 decreases, compensator 26 integrates the amount of deviation of output E23. Then, compensator 26 supplies compensation value E26 to adder 29, so that current set value EI0 from constant power controller I0 is reduced by value E26 at adder 29. When AC voltage detected value E22 returns to a predetermined value, compensator 26 holds the preceding compensation value E26.

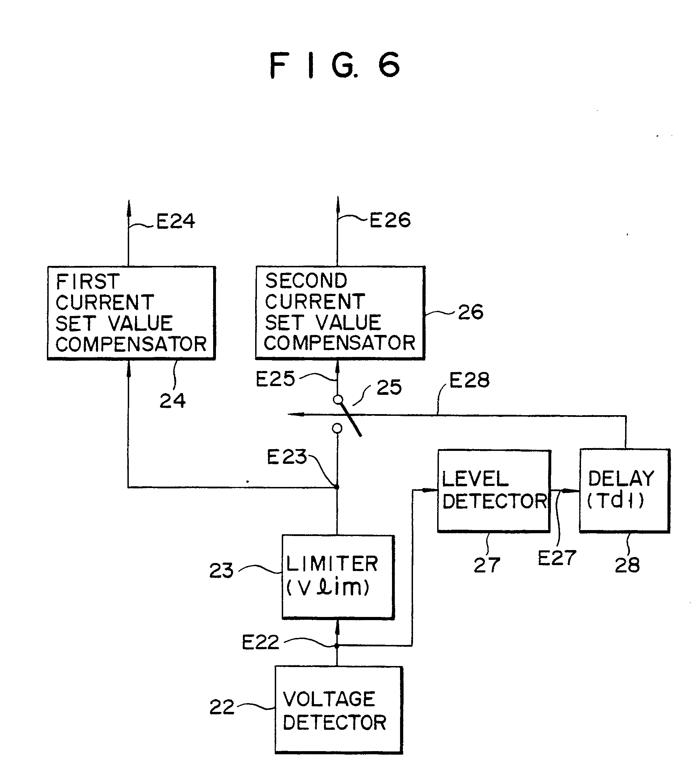

Fig. 5 is a connection diagram showing a part of an AC system to which the embodiment of Fig.

3 is applied. In Fig. 5, reference numeral IB denotes a thyristor converter; 4B, a power transformer; 30, an RC; 5B and 3I-34, circuit breakers; and 6B-6D, AC systems which mean AC bus lines. Assumed that circuit breakers 3I and 32 are interrupted due to a malfunction occurring between AC systems 6B and 6C, so that the supply of reactive power to converter IB decreases to reduce the voltage of AC system 6B.

The amount of decrease of voltage E6B of AC system 6B is detected by AC voltage detector 22, and detected voltage E22 is converted, via limiter 23, into output E23. In response to output E23, current set value EI0 is reduced, at high speed, by the operation of current set value compensator 24. Then, the delayed phase reactive power, to be consumed by converter IB, decreases, and voltage E6B (or Ed in Fig. 2) of AC system 6B recovers to a normal value. In this case, since the current (Id in Fig. 2) is reduced at high speed, the aforementioned swing of voltage E6B, as is shown between time tI and t7 in Fig. 4A, will then occur.

However, even when the voltage swing occurs, if the AC system malfunction, being previously presumed, is eliminated within a short period of time, the circuit between AC systems 6B and 6C can be reclosed. In this case, no problem will arise if the AC system returns to its normal state, and second current set value compensator 26 does not operate. In this respect, it is desirable to determine delay time Tdl of delay circuit 28 in consideration of the reclose time of the AC system.

Now consideration will be given to a case where the reclosure of the AC system has failed, and where the foregoing voltage swing continues for a long time. This voltage swing will be further considered in detail.

In the circuit of Fig. 5, as AC system 6B becomes weak with the circuit-open of circuit breakers 3I and 32, the rate of reduction of the current, flowing through converter IB, must be high. When the rate of reduction of the current is high, then, as the AC system becomes weak, the influence of the high current reduction rate becomes serious, so that the voltage swing is very likely to occur, and this swing continues for a long time. Namely, there are practically contradictory requirements (high speed requirement and no swing requirement).

According to the embodiment of Fig. 3, second current set value compensator 26 comes into operation if the reclosure of the circuit breaker has failed. Then, the voltage reduction amount (E25) is integrated, the integrated value is held at compensator 26, and current set value EI0 is reduced at adder 29, so that the AC voltage reduction amount decreases. This means that the magnitude of a signal (E23), supplied to first current set value compensator 24, decreases. Consequently, even if the operating speed of compensator 24 is high, the influence of a high speed operation, exerted on the AC system, becomes small.

Figs. 4A-4F exemplify the results of simulations using the embodiment of Fig. 3. Assume that the limiting level (Vlim) of limiter 23 is set at 0.9 pu, as is shown in Fig. 4A. When voltage E6B (Fig. 4A) of AC system 6B decreases to a value below 0.9 pu at time tI, output signal E24 (Fig. 4E) is generated from current set value compensator 24, to thereby reduce current set value EI0. Then, current set value EI0 is remarkably reduced so as to quickly increase voltage E6B toward I.0 pu. When voltage E6B of AC system 6B reaches a value above 0.9 pu at time t2, output signal E24 from compensator 24 decreases so that current set value EI0 increases. Then, voltage E6B again decreases, and again reaches 0.9 pu, at time t4. In this manner, voltage E6B transiently fluctuates and periodically becomes overvoltages.

On the other hand, after the elapse of delay time Tdl of delay circuit 28 (Fig. 4D), switch 25 is turned on at time t3, so that second current set value compensator 26 comes into operation. Then, voltage reduction amount E25, corresponding to limiter output E23, is integrated by compensator 26, from time t4 to time t5, and integrated value E26 is held at compensator 26, so that current set value EI0 decreases to a certain given value corresponding to E26. To this end, voltage E6B is again returned to its rated value (or original state). However, since current set value EI0 has already been reduced to aforesaid certain given value in the subsequent operating cycle, voltage reduction amount E25 is small. Consequently, the voltage fluctuation can be promptly suppressed.

As has been described above, according to the embodiment of Fig. 3, when the AC voltage (E6A or E6B) of the AC system (6A or 6B) drops, the current (Id) of the converter (IA or IB) can be reduced, at high speed, while at the same time preventing the aforementioned voltage instability. Also, any voltage instability, caused by the above high-speed current reduction operation, can be promptly suppressed.

In addition, the present invention can provide the following advantage.

In the above description, the operation of RC 30 of Fig. 5 is not mentioned. Now, RC 30 will be described in relation to the operation and advantage of the present invention. Again assume that circuit breakers 3I and 32 in Fig. 5 are interrupped. Then, voltage E6B of AC system 6B decreases, and first current set value compensator 24 of Fig. 3 operates at high speed, to thereby reduce current set value E29. Obviously, RC 30 renders to increase the supply amount of leading reactive power in order to compensate for the drop in AC voltage E6B. However, if the capacity of RC 30 is not sufficiently large, RC 30 will be undesirably overexcited.

If second current set value compensator 26 in the embodiment of Fig. 3 is not provided, it is presumed that the operation of RC 30 and compensator 24 will render AC system 6B stable, after the elapse of a predetermined period of time. However, since RC 30 is in the overexcited state, a protecton circuit of RC 30 is made operative after the expiration of the predetermined time period, to thereby reduce the amount of leading reactive power supplied. Then, voltage E6B of AC system 6B drops, and compensator 24 is again quickly made operative, so that the voltage swing occurs. After the elapse of a predetermined period of time, the protection circuit of RC 30 is made inoperative and RC 30 again supplies the leading reactive power until it is again overexcited. In other words, the voltage swing occurs periodically, and this voltage swing continues permanently.

However, according to the embodiment of Fig. 3, since current set value compensator 26 operates after elapse of a predetermined period of time, the inconvenience of the permanently-continuing voltage swing can be eliminated. Assume that, the protection circuit of RC 30 operates and reduces the amount of the leading reactive power supplied. In this case, if voltage E6B of AC system 6B drops, second current set value compensator 26 operates to reduce current set value E29, and also holds this reduced current set value. To this end, the amount of the leading reactive power of RC 30 supplied, the voltage of the AC system, and the reactive power to be consumed by converter IB, are finally balanced. Thus, this embodiment of the present invention has a material advantage in that the mutual interference occurring between RC 30 and the converter apparatus can be substantially eliminated.

Fig. 6 is a block diagram showing another modification of the embodiment of Fig. 3. Level detector 27 receives nonlimited AC voltage detection value E22. In this modification, the detection level (threshold level) of detector 27 of Fig. 6 is higher than that of Fig. 3 and is set at a value substantially equal to limiting level Vlim of limiter 23. The operation of the apparatus of Fig. 6 is substantially the same as that of Fig. 3.

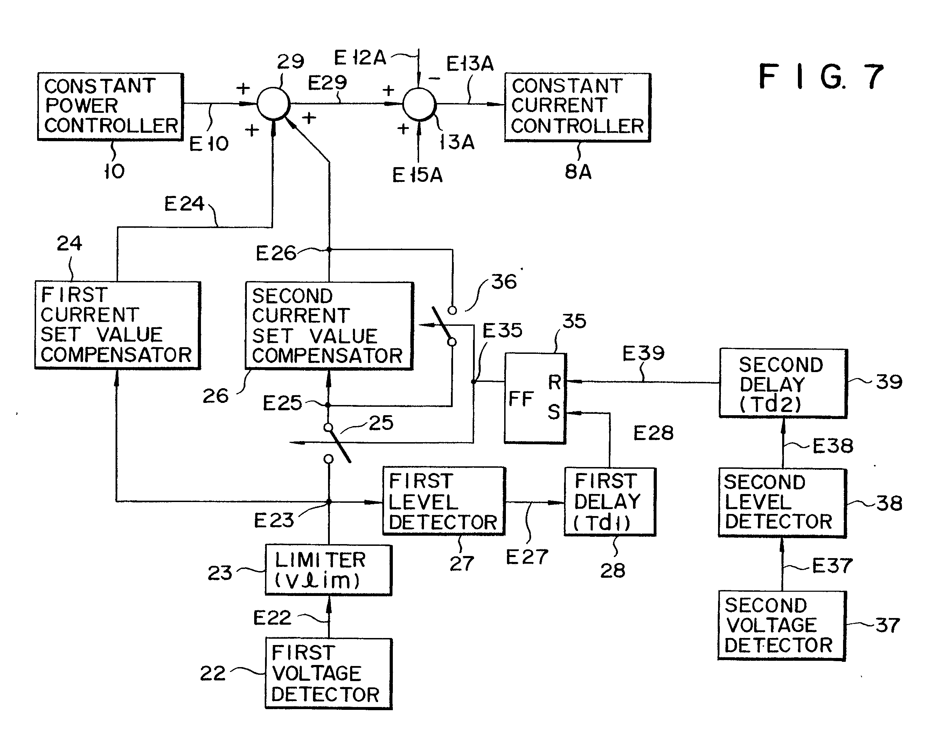

Fig. 7 is a block diagram showing another embodiment of the present invention. Output E28 from delay circuit 28 is supplied to the set input of RS flip-flop (hereinafter referred to as RS FF) 35 in Fig. 7. Output E35 of RS FF 35 controls the opening/closing of switches 25 and 36. That is, when output E35 is generated, switch 25 is closed, while switch 36 is opened. When output E35 ceases, switch 25 is opened, so that compensator 26 is free of output E23 from limiter 23, while switch 36 is closed so that the input and output of compensator 26 is short-circuited, so as to reset value E26 held in compensator 26.

Meanwhile, voltage E6B of AC system 6B is detected by second voltage detector 37. Output E37 of voltage detector 37 is supplied to second level detector 38. When voltage E6B is above a predetermined value, level detector 38 supplies detection signal E38 to delay circuit 39. Delay time Td2 of circuit 39 is much longer than delay time Tdl of circuit 28. Output E39 (Fig. 4C) from delay circuit 39 is supplied to the reset input of RS FF 35.

The operation of the embodiment of Fig. 7 wherein circuit breakers 3l and 32 (Fig. 5) are opened is substantially the same as that of Fig. 3. Now consideration will be given to a case where the malfunction occurring between AC systems 6B and 6C is removed, and circuit breakers 3l and 32 are closed again; that is, the situation following restoration of the AC system will be considered. In this case, AC system 6C can supply reactive power to AC system 6B again. However, since current set value compensator 26 still holds its output value E26, current set value E29 of converter IB is held at the preceding reduced value. This means that the transmission power capacity of the converter (IA or IB) cannot be fully used. To eliminate such an inconvenience, it is desirable to make compensator 26 inoperative.

If AC system 6C can supply enough reactive power after the reclosing of circuit breakers 3l and 32, voltage E6B of AC system 6B becomes higher than the voltage obtained before the restoring of the AC system.

The condition wherein voltage E6B of AC system 6B has already been returned to a value above the predetermined value (e.g., 0.97 pu in Fig. 4A) is detected by level detector 38. Detection output E38 from detector 38 is supplied to delay circuit 39. Delay circuit 39 is used to detect the fact that the return of AC voltage E6B has been attained, not by the voltage swing of the AC system but by the restoring of the system state. This fact can be detected to be based on a condition that the return of AC voltage E6B is continued for a relatively long period of time Td2 (Td2 >> Tdl).

After the elapse of delay time Td2 from time t8 in Fig. 4A, delay circuit 39 supplies output E39, with logic level "l", to the reset input of RS FF 35 (t9 in Fig. 4C). When RS FF 35 is reset by output E39, switch 25 is opened, so as to stop the integrating operation of compensator 26. At the same time, switch 36 is closed, and the input and output of an integrator in compensator 26) is short-circuited. That is, an integration capacitor of the integrator (not shown) is discharged. Then, the operation of compensator 26 is stopped, and current set value E29 is increased, so that converter IA can transmit a prescribed amount of power in a manner similar to that in the previous normal state.

Although the AC voltage drop of AC system 6B is directly detected in the above embodiment, in place of such a direct detection of AC voltage, the DC voltage (Ed in Fig. 2), or the control delay angle of the converter (IA or IB), can be detected. This is because if the voltage of the AC system decreases, the DC voltage (Ed) also inevitably decreases, and, if the voltage of the AC system on the inverter side decreases, the margin angle limiter controller normally increases the leading control angle, in accordance with the amount of reduction in the AC voltage, so as to prevent failure of the commutation.

Incidentally, a method based on the judgment of a human operator has also obviously been considered as the means for releasing the integration value-holding function of current set value compensator 26.

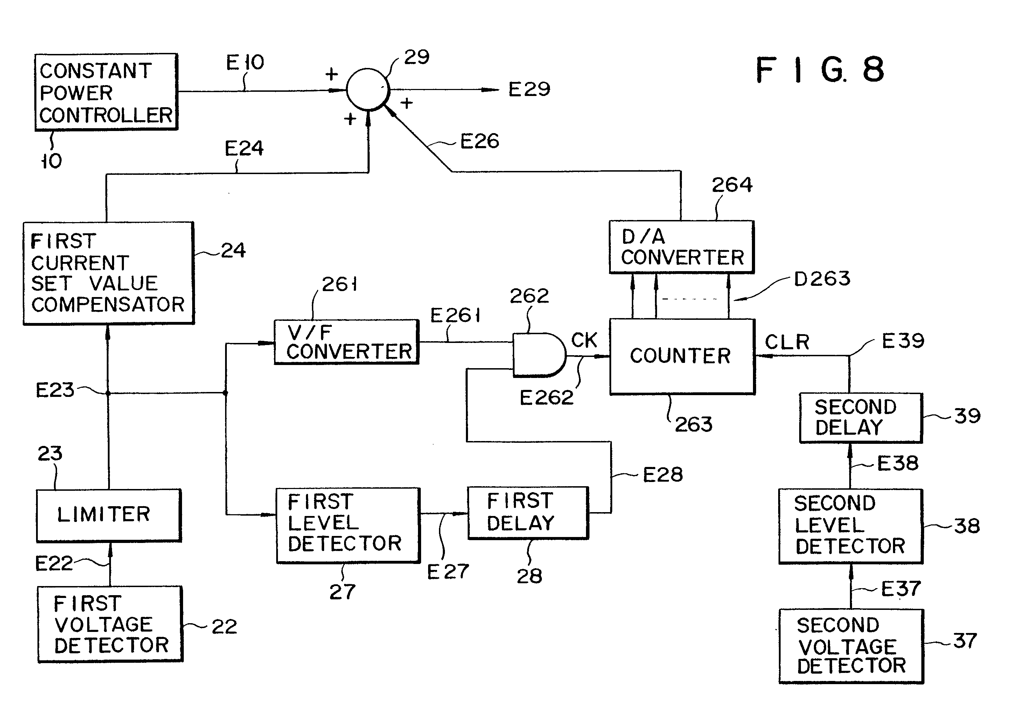

Fig. 8 is a block diagram showing still another embodiment of the present invention. This embodiment can be regarded as a modification of the embodiment of Fig. 7. In the embodiment of Fig. 8, the voltage potential of limiter output E23 is converted, via V/F converter 26I, into pulse signal E26I. Pulse signal E26I is supplied to the first input of AND gate 262. The second input of AND gate 262 receives delayed output E28 from first delay circuit 28. After the elapse of delay time TdI of delay circuit 28, from time tI in Fig. 4D, the logic level of output E28 becomes "I", so that AND gate 262 opens. Then, pulse signal E26I passes through AND gate 262, and is supplied to the clock input of counter 263.

Counter 263 is cleared by delayed output E39 from second delay circuit 39. Counter 263 accumulates the number of pulses of signal E26I passing through AND gate 262 from time t3 to time t9 (Figs. 4C and 4D); that is, counter 263 serves as an integrator which integrates the amount of detected AC voltage E22 (= E23) appearing between time t3 and time t9. AND gate 262 has a function of switch 25 in Fig. 7, and the clearing of counter 263 corresponds to the closing of switch 36 in Fig. 7. Result D263 of the count of counter 263 is converted into corresponding analog value E26 which is supplied to adder 29.

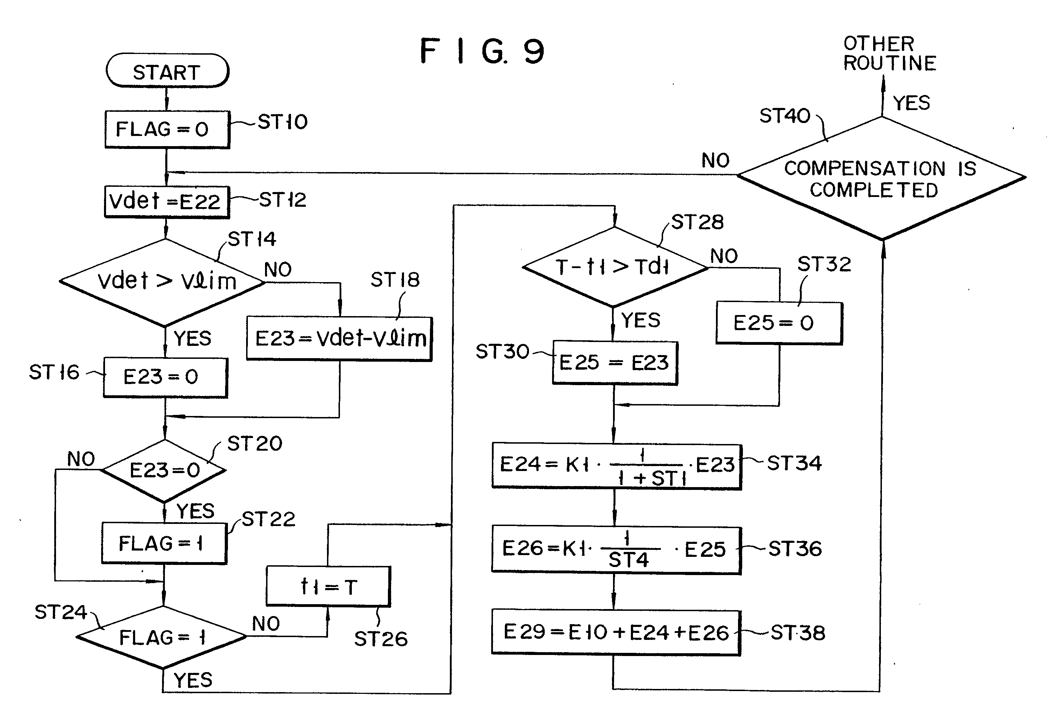

Fig. 9 is a flowchart explaining an operational sequence of the embodiment of Fig. 3 in which circuit elements 23-29 are replaced by a microcomputer (not shown). This microcomputer receives output E22 from voltage detector 22 and current set value EI0 from constant power controller I0, and supplies adder I3A (or I3B) with compensated current set value E29 representing the sum of EI0, E24, and E26.

First, a flag of the microcomputer, representing the existence of signal E27, is set at zero (step STI0). Then, detected AC voltage E22 is fetched for detection value Vdet (step STI2). When Vdet > Vlim ("yes" at step STI4), limiter output value E23 is set at zero (step STI6), where Vlim denotes a given limiter level for discriminating value E23. If Vdet ≤ Vlim ("no" at step STI4), potential difference Vdet - Vlim is used as limiter output value E23 (step STI8).

When E23 is zero ("yes" at step ST20), the aforesaid flag is set at "I" (step ST22). If E23 is not zero ("no" at step ST20), the content of the flag is checked (step ST24). If the content of the flag is not "I" ("no" at step ST24), data of present time T, which is obtained from a timepiece counter (not shown), is used for data of time tI shown in Figs. 4A-4F (step ST26). When the content of the flag is "I" ("yes" at step ST24), time difference T - tI is compared with given delay time TdI (step ST28). When T - tI > TdI ("yes" at step ST28), input value E25 for the second current set value compensation is set at value E23 (step ST30). If T - tI ≤ TdI ("no" at step ST28), input value E25 for the second current set value compensation is set at zero (step ST32).

Subsequent to steps ST30 and ST32, first current compensation value E24 is determined according to relation $E24 = KI \cdot \{(I/(I + sTI)\} \cdot E23$ (step ST34), and second current compensation value E26 is determined according to relation $E26 = KI \cdot (I/sT4) \cdot E25$ (step ST36). Then, compensated current set value E29, to be supplied to adder I3A (or I3B), is determined according to relation $E29 = EI0 + E24 + E26$ (step ST38).

When the current set value compensation operation is completed ("yes" at step ST40), the program sequence of the microcomputer goes to other routines. If the current set value compensation operation is not yet completed ("no" at step ST40), the program sequence of steps STI2 - ST38 is repeated.

Figs. I0A and I0B are flowcharts jointly explaining an operational sequence of the embodiment of Fig. 7 or 8, in which circuit elements 23-29 and 35-39 are replaced by a microcomputer (not shown). This microcomputer receives outputs E22, E37 from voltage detectors 22, 37 as well as current set value EI0 from constant power controller I0, and supplies adder I3A (or I3B) with compensated current set value E29 representing the sum of EI0, E24, and E26.

First, flags I and 3 of the microcomputer are both set at zero or "0" while flags 2 and 4 thereof are both set at "I". Further, time data tI is set at positive infinite value while time data t2 is set at negative infinite value (step STII0). Here, flags I, 2, 3, 4, and 5 represent the existence of signals E27, E38, E28, E39, and E35, respectively. Then, first detected AC voltage E22 is fetched for first detection value Vdetl (step STII2). When Vdetl > Vliml ("yes" at step STII4), limiter output value E23 is set at zero (step STII6), where Vliml denotes a first limiter level for discriminating value E23. If Vdetl ≤ Vliml ("no" at step STII4), potential difference Vdetl - Vliml is used for limiter output value E23 (step STII8).

When E23 < 0 ("yes" at step STI20), flag I is set at "I" (step STI22). If E23 = "0" ("no" at step STI20), flag I is set at "0" (step STI24). Then, the contents of flag I, obtained before and after steps STI20 - STI24, are checked (step STI26). If the preceding content of flag I is "0" and the present content of flag I is "I" ("yes" at step STI26), data of present time T, which is obtained from a timepiece counter (not shown), is used for data of time tl shown in Figs. 4A-4F (step STI28).

When the preceding content of flag I is "I" or the present content of flag I is "0" ("no" at step STI26), time difference T - tl is compared with given delay time Tdl (step STI30). When T - tl > Tdl ("yes" at step STI30), flag 3 is set at "I" (step STI32). If T - tl ≤ Tdl ("no" at step STI30), second detected AC voltage E37 is fetched for second detection value Vdet2 (step STI34). When Vdet2 > Vlim2 ("yes" at step STI36), flag 2 is set at "I" (step STI38), where Vlim2 denotes a second limiter level for discriminating value E37. If Vdet2 ≤ Vlim2 ("no" at step STI36), flag 2 is set at "0" (step STI40).

Next, the contents of flag 2, obtained before and after steps STI36 - STI40, are checked (step STI42). If the preceding content of flag 2 is "0" and the present content of flag 2 is "I" ("yes" at step STI42), data of present time T is used for data of time t2 shown in Figs. 4A-4F (step STI44). When the preceding content of flag 2 is "I" or the present content of flag 2 is "0" ("no" at step STI42), time difference T - t2 is compared with given delay time Td2 (step STI46). When T - t2 > Td2 ("yes" at step STI46), flag 4 is set at "I" (step STI48).

If T - t2 ≤ Td2 ("no" at step STI46), the content of flag 3 is checked (step STI50 in Fig. I0B). When flag 3 = "I" ("yes" at step STI50), flag 5 is set at I (step STI52). If flag 3 = "0" ("no" at step STI50), then the content of flag 4 is checked (step STI54). When flag 4 = I ("yes" at step STI54), flag 5 is set at "0" (step STI56). If flag 4 = "0" ("no" at step STI54), then the content of flag 5 is checked (step STI58).

When flag 5 = "I" ("yes" at step STI58), second current compensation value E26 is determined according to relation E26 = KI•(I/sT4)•E23 (step STI60). If flag 5 = "0" ("no" at step STI58),

then value E26 is set at "0" (step STI62). Then, first current compensation value E24 is determined according to relation E24 = KI•{(I/(I + sTI)}•E23 (step STI64). Following this, compensated current set value E29, to be supplied to adder I3A (or I3B), is determined according to relation E29 = EI0 + E24 + E26 (step STI66).

When the current set value compensation operation is completed ("yes" at step STI68), the program sequence of the microcomputer goes to other routines. If the current set value compensation operation is not yet completed ("no" at step STI68), the program sequence of steps STII2 - STI66 is repeated.

The present invention has the considerable advantage that by the additional use of a simple circuit as shown in Fig. 3 etc., or by use of the sequence of Fig. 9 or Figs. I0A and I0B, voltage instability occurring in a weak AC system, coupled to an AC-DC converter apparatus, can be prevented, and mutual interference between the converter apparatus and a reactive power-compensating apparatus such as a rotary condenser or synchronous compensator, can also be prevented.

**Claims**

1. A control apparatus for an AC-DC converter coupled to an AC system (6A, 6B), said control apparatus (7-18) being provided with a constant current controller (8A, 8B) and a constant margin angle controller (7A, 7B), comprising:

   detector means (22, 23) for detecting a decrease in a voltage (E6B) of said AC system (6B), below a predetermined value (0.9 pu in Fig. 4A), and generating a detection signal (E23) representing the decrease of the voltage (E6B) of said AC system (6B); and

   first compensation means (24), coupled to said detector means (22, 23) and said control apparatus (10, 13A), for compensating for a current set value (E10), by a first value (E24) corresponding to said detection signal (E23), the compensated current set value (E10 or E29) serving as a control target of said constant current controller (8A); characterized by

   second compensation means (25-28), coupled to said detector means (22, 23) and said control apparatus (10, 13A), for compensating for said current set value (E10) by a second value (E26) corresponding to said detection signal (E23), if the voltage (E6B) of said AC system (6B) has not returned to a given normal value (0.97 pu), even after elapse of a first predetermined period of time (Td1) measured from time (t1) when said detection signal (E23) is generated, said second compensation means (25-28) holding said second value (E26) for a second predetermined period of time (from t3 to t9).

2. A control apparatus according to claim 1, further comprising:

second detector means (35, 37-39), coupled to said second compensation means (25-28) and said AC system (6B), for detecting the voltage (E6B) of said AC system (6B), and generating a reset signal (E35) when the voltage (E6B) of said AC system (6B) has returned to said given normal value (0.97 pu); and

release means (36), coupled to said second compensation means (25-26) and said second detector means (35), for releasing the holding of said second value (E26) when said reset signal (E35) is generated.

3. A control apparatus according to claim 2, characterized in that said second detector means (35, 37-39) includes means (38) for determining when said release means (36) has released the holding of said second value (E26).

4. A control apparatus according to any one of claims I to 3, characterized in that said second compensation means (26) has a function of integrating said detection signal (E23) with respect to time, and provides the integrated signal as said second value (E26).

5. A control apparatus according to any one of claims I to 4, characterized in that the speed of response of said first compensation means (24), with respect to said detection signal (E23), is faster than that of said second compensation means (26).

6. A control apparatus according to any one of claims I to 5, characterized in that said detector means (22, 23) includes limiter means (23), having a given limiter level (Vlim), for limiting the signal level of a voltage signal (E22) representing the decrease of the voltage (E6B) of said AC system (6B), and generating said detection signal (E23) only when said voltage signal (E22) falls within a range (0 to Vlim) determined by said given limiter level (Vlim).

7. A control apparatus according to any one of claims I to 6, characterized in that said second compensation means (25-28) includes a delay circuit (27) for determining said first predetermined period of time (Tdl).

## Revendications

1. Dispositif de commande pour un convertisseur courant alternatif-courant continu couplé à un réseau à courant alternatif (6A, 6B), ledit dispositif de commande (7 à 18) étant équipé d'une unité de commande de courant constant (8A, 8B) et d'une unité de commande d'angle de marge constant (7A, 7B), comprenant :

un moyen de détection (22, 23) pour détecter une chute de tension (E6B) dudit réseau à courant alternatif (6B), au dessous d'une valeur prédéterminée (0,9 pu à la figure 4A), et produisant un signal de détection (E23) représentant la chute de la tension (E6B) dudit réseau à courant alternatif (6B); et

un premier moyen de compensation (24), connecté audit moyen de détection (22, 23) et audit dispositif de commande (10, 13A), pour compenser à une valeur imposée de courant (E10), par une première valeur (E24) correspondant audit signal de détection (E23), la valeur imposée de courant compensé (E10 ou E29) servant d'objectif pour la commande de ladite unité de commande de courant constant (8A); caractérisé par

un second moyen de compensation (25 à 28), couplé audit moyen de détection (22 à 23) et audit dispositif de commande (10, 13A), pour compenser à ladite valeur imposée de courant (E10) par une seconde valeur (E26) correspondant audit signal de détection (E23), si la tension (E6B) dudit réseau à courant alternatif (6B) n'est pas revenue à une valeur normale donnée (0,97 pu), même après l'écoulement d'une première période de temps prédéterminée (Td1) mesurée à partir d'un instant (t1) où ledit signal de détection (E23) est produit, ledit second moyen de compensation (25 à 25) maintenant ladite seconde valeur (E26) pendant une seconde période de temps prédéterminée (allant de t3 à t9).

2. Dispositif de commande selon la revendication 1, comprenant de plus :

un second moyen de détection (35, 37 à 39), couplé audit second moyen de compensation (25 à 28) et audit réseau à courant alternatif (6B), pour détecter la tension (E6B) dudit réseau à courant alternatif (6B), et produire un signal de remise à zéro (E35) lorsque la tension (E6B) dudit réseau à courant alternatif (6B) est revenue à ladite valeur normale donnée (0,97 pu); et

un moyen de déclenchement (36), couplé audit second moyen de compensation (25 à 26) et audit second moyen de détection (35), pour relâcher le maintien de ladite seconde valeur (E26) lorsque ledit signal de remise à zéro (E35) est produit.

3. Dispositif de commande selon la revendication 2, caractérisé en ce que ledit second moyen de détection (35, 37 à 39) comprend un moyen (35) pour déterminer le moment où ledit moyen de déclenchement (36) a relâché le maintien de ladite seconde valeur (E26).

4. Dispositif de commande selon l'une quelconque des revendications 1 à 3, caractérisé en ce que ledit second moyen de compensation (26) comporte une fonction d'intégration dudit signal de détection (E23) par rapport au temps, et délivre le signal intégré en tant que ladite seconde valeur (E26).

5. Dispositif de commande selon l'une quelconque des revendications 1 à 4, caractérisé en ce que la vitesse de réponse dudit premier moyen de compensation (24), par rapport audit signal de détection (E23) est plus rapide que celle dudit second moyen de compensation (26).

6. Dispositif de commande selon l'une quelconque des revendications 1 à 5, caractérisé en ce que ledit moyen de détection (22, 23) comprend un moyen de limitation (23) ayant un niveau de limitation donné (V1im), pour limiter le niveau de signal d'un signal de tension (E22) représentant la chute de la tension (E6B) dudit réseau à courant alternatif (6B), et pour produire ledit signal de détection (E23) seulement lorsque ledit signal de tension (E22) tombe à l'intérieur d'une fourchette (0 à V1im) déterminé par ledit niveau de limitation donné (V1im).

7. Dispositif de commande selon l'une quelconque des revendications 1 à 6, caractérisé en ce que ledit second moyen de compensation (25 à 28) comprend un circuit à retard pour déterminer ladite première période de temps prédéterminée (Td1).

**Patentansprüche**

1. Regeleinrichtung (7-18) für einen an ein Wechselstromnetz (6A, 6B) angeschlossenen Wechselstrom-Gleichstromkonverter, die mit einem Strcmkonstantregler (8A, 8B) und einem Löschwinkel-Konstantregler versehen ist umfassend:

Detektormittel (22, 23) zum Detektieren eines Abfalls einer Spannung (E6B) des Wechselstromnetzes (6B) unter einen vorbestimmten Wert (0,9 pu in Fig. 4A) und zum Generieren eines den Abfall der Spannung (E6B) des Wechselstromnetzes (6B) repräsentierenden Detektionssignals (E23); und

erste, an die Detektormittel (22, 23) und an die Regeleinrichtung (10, 13A) zum Kompensieren eines Stromstellwertes (E10) durch einen ersten zu dem Detektionssignal (E23) korrespondierenden Wert (E24) angeschlossenen Kompensationsmittel (24), wobei der kompensierte Stromstellwert (E10 oder E29) als Reglersollwert des Stromkonstantreglers (8A) dient;

**gekennzeichnet** durch

zweite Kompensationsmittel (25-28), angeschlossen an die Detektormittel (22, 23) und die Regeleinrichtung (10, 13A) zum Kompensieren des Stromstellwertes (E10) durch einen zweiten, zum Detektionssignal (E23) korrespondierenden Wert (E26), falls die Spannung (E6B) des Wechselstromnetzes auch nach Ablauf eines ersten vorbestimmten Zeitintervalls (Td1), gemessen vom Zeitpunkt (t1) an dem das Detektionssignal (E23) generiert wurde, nicht zu einem gegebenen Normalwert (0,97 pu) zurückgekehrt ist, wobei die zweiten Kompensationsmittel (25-28) den zweiten Wert (E26) über ein zweites vorbestimmtes Zeitintervall (von t3 bis t9) halten.

2. Regeleinrichtung gemäß Anspruch 1, weiterhin umfassend:

zweite Detektormittel (35, 37-39), angeschlossen an die zweiten Kompensationsmittel (25-28) und das Wechselstromnetz (6B) zum Detektieren der Spannung (E6B) des Wechselstromnetzes (6B) und zum Generieren eines Rücksetzsignales (E35), wenn die Spannung (E6B) des Wechselstromnetzes (6B) zu dem gegebenen Normalwert (0,97 pu) zurückgekehrt ist; und

Freigabemittel (36), angeschlossen an die zweiten Kompensationsmittel (25-26) und die zweiten Detektormittel (35), zum Beenden des Haltens des zweiten Wertes (E26), wenn das Rücksetzsignal (E35) generiert wird.

3. Regeleinrichtung gemäß Anspruch 2, dadurch **gekennzeichnet,** daß die zweiten Detektormittel (35, 37-39) Mittel (38) enthalten zum Bestimmen, wann die Freigabemittel (36) das Halten des zweiten Wertes (E26) beendet haben.

4. Regeleinrichtung gemäß einem der Ansprüche 1 bis 3, dadurch **gekennzeichnet,** daß die zweiten Kompensationsmittel (26) eine Integrationsfunktion bezüglich des Detektionssignals (E23) über die Zeit haben und das integrierte Signal als den zweiten Wert (E26) bereitstellen.

5. Regeleinrichtung gemäß einem der Ansprüche 1 bis 4, dädurch **gekennzeichnet,** daß die Geschwindigkeit der Antwort der ersten Kompensationsmittel (24) in bezug auf das Detektionssignal (E23) schneller ist als diejenige der zweiten Kompensationsmittel (26).

6. Regeleinrichtung gemäß einem der Ansprüche 1 bis 5, dadurch **gekennzeichnet,** daß die Detektormittel (22, 23) Begrenzermittel (23) beinhalten mit einem gegebenen Begrenzungswert (Vlim) zum Begrenzen des Signalwertes eines den Abfall der Spannung (E6B) des Wechselstromnetzes (6B) repräsentierenden Spannungssignals (E22) und zum Generieren des Detektionssignal (E23) nur, wenn das Spannungssignal (E22) in einen durch den vorgegebenen Begrenzungswert bestimmten Bereich (0 bis V1im) fällt.

7. Regeleinrichtung gemäß einem der Ansprüche 1 bis 6, dadurch **gekennzeichnet,** daß die zweiten Kompensationsmittel (25-28) einen Verzögerungsschaltkreis (27) zum Bestimmen des ersten vorbestimmen Zeitintervalles (Td1) beinhalten.

F I G. 1

# F I G. 2

# F I G. 3

# F I G. 5

14

FIG. 4A

AC LINE
VOLTAGE (E6B)

1.0 pu
0.9 pu

0.97 pu

FIG. 4B
LIMITER
OUTPUT
(E23)

FIG. 4C
DELAY
OUTPUT
(E39)

Td 2    LOGIC "1"

FIG. 4D
DELAY
OUTPUT
(E28)

Td 1    LOGIC "1"

FIG. 4E
CURRENT
SET VALUE
COMPEN-
SATION
OUTPUT
(E24)

FIG. 4F
CURRENT
SET VALUE
COMPEN-
SATION
OUTPUT
(E26)

t1 t2 t3  t4 t5  t6 t7    t8    t9  TIME

EP 0 231 012 B1

# F I G. 6

E24

E26

| FIRST CURRENT SET VALUE COMPENSATOR | SECOND CURRENT SET VALUE COMPENSATOR |
|---|---|

~26

24

E25

25

E28

E23

LEVEL DETECTOR

DELAY (Td1)

27

E27

28

23

LIMITER (Vℓim)

E22

22

VOLTAGE DETECTOR

16

F I G. 7

F I G. 8

EP 0 231 012 B1

# F I G. 9

START

FLAG = 0 — ST10

Vdet = E22 — ST12

ST14 Vdet > Vℓim
- NO → E23 = Vdet - Vℓim (ST18)
- YES → E23 = 0 (ST16)

ST20 E23 = 0
- NO →
- YES → FLAG = 1 (ST22)

ST24 FLAG = 1
- NO → t1 = T (ST26)
- YES →

ST28 T - t1 > Td1
- NO → E25 = 0 (ST32)
- YES → E25 = E23 (ST30)

$$E24 = K1 \cdot \frac{1}{1 + ST1} \cdot E23 \quad ST34$$

$$E26 = K1 \cdot \frac{1}{ST4} \cdot E25 \quad ST36$$

E29 = E10 + E24 + E26 — ST38

ST40 COMPENSATION IS COMPLETED
- NO →
- YES → OTHER ROUTINE

EP 0 231 012 B1

# F I G. 10A

START

ST110 — FLAG1,3=0 FLAG2,4=1 t1=∞, t2=-∞

(B)

ST112 — Vdet1 = E22

ST114 — Vdet1 > Vℓim1

NO — ST118 — E23 = Vdet1-Vℓim1

YES — ST116 — E23 = 0

ST120 — E23 < 0

NO — ST124 — FLAG1 = 0

YES — ST122 — FLAG1 = 1

ST126 — PRECEDING FLAG1=0 & PRESENT FLAG1=1

NO

YES

ST128 — t1 = T

ST130 — T-t1 > Td1

NO

YES — ST132 — FLAG3 = 1

ST134 — Vdet2 = E37

ST136 — Vdet2 > Vℓim2

NO — ST140 — FLAG2 = 0

YES — ST138 — FLAG2 = 1

ST142 — PRECEDING FLAG2=0 & PRESENT FLAG2=1

YES — ST144 — t2 = T

NO

ST146 — T-t2 > Td2

YES — ST148 — FLAG4 = 1

(A)

NO

# F I G. 10 B

Ⓐ

ST150

FLAG3=1 —— NO

YES

ST152 — FLAG5=1

ST154
FLAG4=1 —— NO

YES

ST156 — FLAG5=0

Ⓑ —— NO

COMPENSATION IS
COMPLETED

ST168

OTHER
ROUTINE

YES

ST158
FLAG5=1 —— NO

ST162

ST160
$E26 = K1 \cdot \dfrac{1}{ST4} \cdot E23$

$E26 = 0$

$E24 = K1 \cdot \dfrac{1}{1+ST1} \cdot E23$ —— ST164

$E29 = E10 + E24 + E26$ —— ST166